Europäisches Patentamt

European Patent Office

Office européen des brevets

(11) Veröffentlichungsnummer: **0 359 213**

**A2**

## EUROPÄISCHE PATENTANMELDUNG

(21) Anmeldenummer: **89116897.3**

(22) Anmeldetag: **12.09.89**

(51) Int. Cl.5: **G02F 1/03**

(30) Priorität: **16.09.88 DE 3831576**

(43) Veröffentlichungstag der Anmeldung:
**21.03.90 Patentblatt 90/12**

(84) Benannte Vertragsstaaten:
**CH FR GB LI NL SE**

(71) Anmelder: **MAIHAK AG**
**Semperstrasse 38 Postfach 60 17 09**
**D-2000 Hamburg 60(DE)**

(72) Erfinder: **Niemeier, Thomas, Dr.**
**zwischen den Höfen 1**
**D-2107 Rosengarten(DE)**
Erfinder: **Ulrich, Reinhard, Prof. Dr.**
**Alte Rennbahn 2**
**D-2110 Buchholz(DE)**
Erfinder: **Zörner, Karlheinz, Dr.**
**Tannenberg 20**
**D-2105 Seevetal 1(DE)**

(74) Vertreter: **Meyer-Roxlau, R.F., Dipl.-Ing.**
**Patentanwalt**
**Mühlbaurstrasse 38b**
**D-8000 München 80(DE)**

(54) **Optisches Strahlungsfilter.**

(57) Optisches Strahlungsfilter mit angenähert perio-disch von der optischen Frequenz abhängigem Transmissionsvermögen, insbesondere zur spektro-skopischen Gasanalyse, wobei der Frequenzabstand benachbarter Transmissionsmaxima des Filters an den Frequenzabstand benachbarter Gasabsorptions-linien angepaßt ist, bestehend aus je einem vorzugs-weise linearen Polarisator und Polarisations-Analysa-tor und doppelbrechenden Elementen zwischen die-sen, deren Transmissionsmaxima in ihrer spektralen Lage durch elektro-optische Modulation der Doppel-brechungen mittels einer Spannung abstimmbar sind. Hierbei ist mindestens eines der doppelbre-chenden Elemente bezüglich der Achsen seiner Polarisations-Eigenzustände derart orthogonal zu den übrigen Elementen angeordnet, daß sich die optische Gesamtverzögerung aller doppelbrechenden Elemente, die den Frequenzabstand benachbar-ter Transmissionsmaxime des Filters bestimmt, er-gibt als die vorzeichenbehaftete Summe der Verzö-gerungen der einzelnen Elemente.

Fig. 1

## Optisches Strahlungsfilter

Die Erfindung betrifft ein optisches Strahlungsfilter für die spektroskopische Analyse von Gasen mit angenähert periodischem Spektrum, dessen Transmissionsvermögen angenähert periodisch von der optischen Frequenz abhängt, wobei der Frequenzabstand benachbarter Transmissionsmaxima des Filters an den Frequenzabstand benachbarter Maxima im Spektrum des Gases angepaßt ist, bestehend aus einem Polarisator, einem Polarisations-Analysator und mindestens zwei zwischen diesen angeordneten doppelbrechenden Elementen, wobei die Transmissionsmaxima des Filters in ihrer spektralen Lage durch elektro-optische Modulation der Doppelbrechungen abstimmbar sind.

Die interferometrische Gasanalyse ist in der Fouriertransformations-Spektrometrie bereits seit geraumer Zeit bekannt. Hierbei wird mit mathematischen Methoden das hoch aufgelöste Emissions- oder Absorptionsspektrum von Gasen aus einem gemessenen Interferogramm berechnet. Eine Auswertung nach Konzentrationsverhältnissen ist jedoch auch derzeit noch problematisch. Insbesondere läßt sich die kontinuierliche Bestimmung der Konzentrationen einzelner Komponenten nicht realisieren.

Interferometrische Gasanalyseverfahren und zugehörige Geräte sind beispielsweise aus der FR-A1 25 55 747, DE-A 25 25 787 und der DE-A 36 12 733 bekannt. Des weiteren ist aus der DE-A 21 00 361 ein Lichtmodulator bekannt.

Bei dem Gerät der FR-A1 25 55 747 sind in den Strahlengang eines Strahlers ein Objektiv, eine Gasküvette, ein Interferenzfilter und ein Detektor eingesetzt. Anstelle einer damals bereits zum Stand der Technik gehörigen Einrichtung mit einer doppelbrechenden Platte zwischen einem Polarisator und einem Analysator ist ein Fabry-Perot-Interferometer vorgesehen, das aus zwei Plättchen mit parallelen Oberflächen besteht, die je mit einer dünnen Reflexionsschicht versehen sind. Mindestens eines dieser Plättchen ist auf ein piezoelektrisches Keramikteil aufgeklebt, damit das Plättchen bei Anlegung einer elektrischen Spannung an das Keramikteil zu Modulationszwecken in Längsrichtung schwingen kann.

Bei dem Analysengerät der DE-A 25 55 787 sind zwei Filter vorgesehen, das erste als schmales Bandpaßfilter aus einer Vielzahl dünner dielektrischer Filmschichten und das zweite mit einer interferenzerzeugenden Einrichtung zur Ausbildung mehrerer Übertragungsfenster in bezüglich der Frequenz regelmäßigen Abständen. Der Frequenzabstand zwischen benachbarten Fenstern ist durch entsprechende Einstellung der interferenzerzeugenden Einrichtung im wesentlich gleich der Frequenzdifferenz zwischen benachbarten Spektrallinien des Absorptionsspektrums. Somit ist die Intensität des von dem zweiten Filter durchgelassenen Signals im wesentlichen gleich der Summe der Intensitäten, die in jedem Übertragungsfenster durch gelassen werden. Als zweites Filter können verschiedene Einrichtungen, insbesondere auch ein Fabry-Perot-Interferometer, verwendet werden. Im übrigen findet auch eine Modulation der Phasendifferenz zwischen den vom zweiten Filter durchgelassenen interferierenden Strahlen statt, und zwar zur Frequenzverschiebung.

Das Gerät der DE-OS 36 12 733 besteht u.a. aus einem Dispersionsgitter zur Wellenlängen-Selektion sowie - umgeben von zwei Polarisatioren - einem photo-elastischen Modulator und einer doppelbrechenden Platte. Es entspricht also im wesentlichen dem Stand der damaligen Technik, weicht hiervon jedoch ab durch Verwendung eines Dispersionsgitters (anstatt eines Interferenzfilters) sowie eines photo-elastischen Modulators (anstatt z. B. eines rotierenden Polarisations-Analysators). Für die gleichzeitige Analyse von zwei Gasen mit Absorptionsspektren unterschiedlicher Periode werden zwei doppelbrechende Platten verwendet.

Der Lichtmodulator der DE-OS 21 00 361 verwendet einen elektro-optisch modulierbaren Kristall, der mit einem folgenden Polarisations-Analysator linear polarisiertes Licht (z. B. von einem Laser) in der Intensität oder der optischen Frequenz modulieren kann. Interessante Anwendungen liegen in der Nachrichtentechnik und der Meßtechnik bei der Erfassung sehr niedriger Lichtintensitäten sowie als umschaltbares Farbfilter bei der Farbfernsehwiedergabe. Eine andere Version des Modulators besteht aus einer Reihenschaltung elektro-optisch modulierbarer Kristalle, die alle gleiche Länge und Orientierung aufweisen, über je einen Schalter mit einer gemeinsamen Spannungsquelle verbunden sowie von nicht-modulierten doppelbrechenden Kristallen der relativen Längen 1, 1 2, 1 4, 1 8, etc. voneinander getrennt sind; bei Verwendung von unpolarisiertem Licht befindet sich vor dieser Anordnung noch ein Polarisator. Dieser Lichtmodulator dient der räumlichen Modulation des Lichtes, ist also eine Ablenkeinrichtung. Hierfür wird mindestens einer der elektro-optisch modulierbaren Kristalle mit der Spannung beaufschlagt.

Der Erfindung liegt die Aufgabe zugrunde, ausgehend von den physikalischen Grundlagen der bekannten Technologie, Resonanzen Periodizitäten im Interferogramm zur Identifizierung und Quantifizierung von Gaskomponenten auszuwerten, in Verbindung mit dem eingangs hinsichtlich seiner Gattung bezeichneten Filter eine Möglichkeit zu schaffen, lediglich die Nutzsignalanteile im Gesamtsignal zu modulieren, um den Signal/Störabstand zu verbessern, was durch Shiftung der Transmission eines periodischen Filters mit elektro-optischen Phasenschiebern erreicht werden soll; dabei soll auch die Möglichkeit berücksichtigt werden, daß vorteilhafterweise sowohl der Modulator für eine Vielzahl von Komponenten (Wellenlängenbereiche) als auch das eigentliche interferometrische Filterelement, gleichgültig ob als Etalon/doppelbrechendes Kristall oder doppelbrechender Fabry-Perot-Resonator, standardisiert und/oder spezifisch abstimmbar eingesetzt werden können.

Diese Aufgabe wird erfindungsgemäß dadurch gelöst, daß mindestens eines der doppelbrechenden Elemente bezüglich der Achsen seiner Polarisations-Eigenzustände derart orthogonal zu den übrigen Elementen angeordnet ist, daß sich die optische Gesamtverzögerung aller doppelbrechenden Elemente, die den Frequenzabstand benachbarter Transmissionsmaxima des Filters bestimmt, ergibt als die vorzeichenbehaftete Summe der Verzögerungen der einzelnen Elemente. Dabei sind im Rahmen der Erfindung die elektro-optisch zu modulierenden doppelbrechenden Elemente selbstverständlich gleichzeitig elektrisch parallel an die Modulationsspannung anzuschließen.

Durch die Ausbildung des Modulators und/oder des Filters aus mindestens zwei doppelbrechenden Elementen heben sich die optischen Verzögerungen der einzelnen Elemente mindestens teilweise wieder auf. Dadurch lassen sich für den Fall der Verwendung optischer Kristalle handliche Kristall-Längen erreichen und bei elektro-optischer Modulation zusätzlich geringere Ansteuerungssignale (Feldstärken). Es ist vorteilhaft, als Modulationshub mindestens den halben Linienabstand zu erreichen, da hierdurch eine Unabhängigkeit von der absoluten Linienlage im Spektrum erreicht wird. Dieser verhältnismäßig große Hub ist erfindungsgemäß dadurch erreicht, daß die mindestens zwei orthogonal zueinander stehenden Elemente durch geeignete Polung gegenphasig moduliert werden.

In vorteilhafter und zweckmäßiger Weiterbildung kann zusätzlich vorgesehen werden, daß die optischen Verzögerungen der einzelnen doppelbrechenden Elemente so gewählt sind, daß die Summe der vorzeichenbehaf teten Einzelverzögerungen - gewichtet mit den Temperaturkoeffizienten der Doppelbrechung - Null ist. Dies bewirkt, daß Filter- und/oder Modulationscharakteristik auch bei großen Temperaturänderungen erhalten bleiben, umständliche Nachjustierung (z.B. des Modulationsarbeitspunk tes) bzw. aufwendige Temperaturstabilisierung also nicht erforderlich sind.

Durch die gemeinsame Realisierung des Etalons für die Interferenz-Weglänge und des Phasenmodulators durch zwei optisch in Reihe geschaltete, doppelbrechende Elemente mit zueinander orthogonaler Orientierung ihrer Polarisationsrichtungen sind die beiden genannten Funktionen naturgemäß miteinander verkoppelt. Beide Funktionen lassen sich jedoch vorteilhaft voneinander trennen. In diesem Fall besteht der Modulator zwar ebenfalls aus zwei optisch in Reihe geschalteten, doppelbrechenden Elementen mit zueinander orthogonaler Orientierung ihrer Polarisationsrichtungen. In diesem Fall übernimmt die Zwei-Elementeinheit bei geeigneter Richtung der wechselnden elektrischen Feldstärke für beide Elemente die Funktion der Phasenmodulation. Bei der Verwendung von Kristallen als doppelbrechende Elemente ist zwar eine bestimmte absolute Kristall-Länge nicht auszuwählen; jedoch ist eine exakt gleiche Länge erforderlich. Die Interferenz-Weglänge kann durch ein drittes doppelbrechendes Element, möglicherweise in der Form eines Kristalls, oder aber auch durch ein doppelbrechendes Fabry-Perot-Filter erzeugt werden.

Nachfolgend wird die Erfindung anhand bevorzugter Ausführungsbeispiele und unter Bezugnahme auf die Zeichnung weiter ins Einzelne gehend beschrieben; in der Zeichnung zeigen:

Fig. 1 eine schematische Gesamt-Darstellung eines ersten erfindungsgemäß gestalteten Gasanalysen-Gerätes und

Fig. 2 eine entsprechende Darstellung eines zweiten Gerätes.

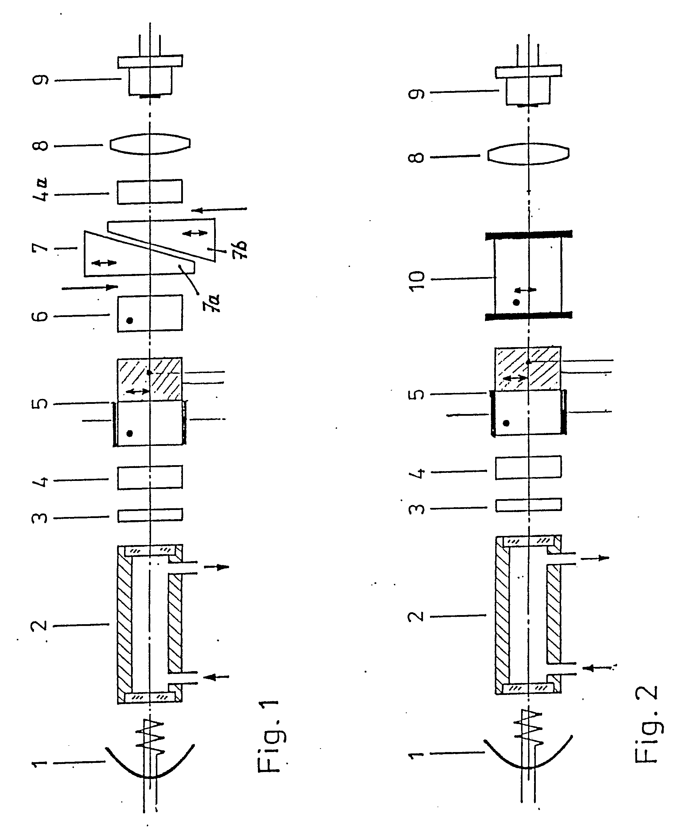

In den Strahlengang eines Strahlers 1, der mit einem Reflektor ausgestattet ist, sind der Reihe nach eingesetzt eine Analysenküvette 2 für das zu untersuchende Gas, eine Interferenz-Filterscheibe 3, ein Polarisator 4, ein Modulator 5, ein weiterer Polarisator 4a, eine Linse 8 und schließlich ein Detektor 9. Im vorstehenden Umfang sind die Geräte der Fig. 1 und 2 identisch, allerdings mit Ausnahme des beim Gerät der Fig. 2 nicht vorgesehenen zweiten Polarisators.

Beim Gerät der Fig. 1 ist zwischen dem Modulator 5 und dem zweiten Polarisator 4a eine ein Kammfilter bildende Einheit vorgesehen, die auch als interferometrisches Etalon bezeichnet werden kann und zunächst aus zwei doppelbrechenden Elementen 6 und 7 besteht. Dabei ist das doppelbrechende Element 7 aus einem Kristall gebildet, und zwar genauer gesagt aus zwei als Keilstücke 7a und 7b gestalteten Kristallen. Die Keilstücke 7a und 7b sind mit ihren Schrägflächen einander zugewandt und entlang ihrer Schrägflächen, also quer zum Strahlengang, gegeneinander verstellbar, um die oben bereits angesprochenen Justierung durchführen zu können.

Bei dem Gerät der Fig. 2 ist anstelle des die Kammfiltereinheit bildenden interferometrischen Etalon 6, 7 des Geräts der Fig. 1 ein Fabry-Perot-Etalon 10 vorgesehen.

Bei den beiden Polarisatoren 4 und 4a handelt es sich um lineare Polarisatoren, zwischen denen als Phasenmodulator zwei elektro-optische doppelbrechende Elemente, insbesondere Kristalle, in orthogonaler Achsposition vorgesehen sind, wobei der ordentliche Strahl des ersten Kristalles zum außerordentlichen Strahl im nachfolgenden Kristall wird, und des weiteren als interferometrisches periodisches Filter (Etalon) die zwei mechanisch justierbaren Keilstücke 7a, 7b (Prismen) zur Einstellung der Grundphasendifferenz vorgesehen sind.

In spezieller Ausführung kann grundsätzlich vorgesehen werden, daß vom Modulator nur eines der doppelbrechenden Elemente moduliert wird und oder daß der Modulator aus ungleichen Materialien kombiniert ist, um Temperatureffekte zu kompensieren.

Das Etalon kann im Rahmen der erfindungsgemäßen Ausbildung und Verwendung durch Verspiegeln der parallelen Außenflächen der Prismen auch als Fabry-Perot-Resonator ausgebildet sein, was insbesondere im UV-Strahlungsbereich zu empfehlen ist.

Durch geeignete Achsausrichtung der doppelbrechenden Elemente bzw. ihrer Materialien ergeben sich zwei ineinander verzahnte, räumlich-periodische Transmissionen, deren Periodizität sich durch die mechanische Justierung der beiden Keilstücke 7a, 7b zueinander verändern läßt.

Zur Modifikation des Modulators können bei der Verwendung von Kristallen als doppelbrechende Elemente diese unterschiedlich lang sein. Es können aber auch unterschiedliche Materialien verwendet werden.

Zur Modifikation des Etalon können ein einziges oder aber auch zwei planparallele Kristallplättchen vorgesehen werden, die eine festvorgegebene Filterperiodizität zur Folge haben. Für die doppelbrechenden Elemente in der Form von Kristallen kommt beim Modulator 5 Lithium-Niobat in Betracht.

Als doppelbrechende Elemente kommen neben Kristallen selbstverständlich auch andere optisch transparente Medien in Betracht.

## Ansprüche

1. Optisches Strahlungsfilter für die spektroskopische Analyse von Gasen mit angenähert periodischem Spektrum, dessen Transmissionsvermögen angenähert periodisch von der optischen Frequenz abhängt, wobei der Frequenzabstand benachbarter Transmissionsmaxima des Filters an den Frequenzabstand benachbarter Maxima im Spektrum des Gases angepaßt ist, bestehend aus einem Polarisator, einem Polarisations-Analysator und mindestens zwei zwischen diesen angeordneten doppelbrechenden Elementen, wobei die Transmissionsmaxima des Filters in ihrer spektralen Lage durch elektro-optische Modulation der Doppelbrechungen abstimmbar sind, dadurch gekennzeichnet, daß mindestens eines der doppelbrechenden Elemente (5, 6, 7 bzw. 5, 10) bezüglich der Achsen seiner Polarisations-Eigenzustände derart orthogonal zu den übrigen Elementen angeordnet ist, daß sich die optische Gesamtverzögerung aller doppelbrechenden Elemente, die den Frequenzabstand benachbarter Transmissionsmaxima des Filters bestimmt, ergibt als die vorzeichenbehaftete Summe der Verzögerungen der einzelnen Elemente.

2. Filter nach Anspruch 1, dadurch gekennzeichnet, daß mindestens zwei doppelbrechende Elemente elektro-optisch modulierbar sind.

3. Filter nach Anspruch 2, dadurch gekennzeichnet, daß alle elektro-optisch modulierbaren Elemente von derselben Spannungsquelle speisbar sind.

4. Filter nach Anspruch 1, dadurch gekennzeichnet, daß ein doppelbrechendes Element (7) aus zwei oder mehr Kristallen (7a, 7b) besteht.

5. Filter nach Anspruch 1, dadurch gekennzeichnet, daß die optischen Verzögerungen der einzelnen doppelbrechenden Elemente (5, 6, 7 bzw. 5, 10) so gewählt sind, daß die Summe der vorzeichenbehafteten Einzelverzögerungen - gewichtet mit den Temperaturkoeffizienten der Doppelbrechung - Null ist.

Fig. 1

Fig. 2

EP 0 359 213 A2